# EUROPÄISCHE PATENTSCHRIFT

(11) **EP 1 908 653 B1**
(45) Veröffentlichungstag und Bekanntmachung des Hinweises auf die Patenterteilung: **15.05.2013**
(21) Anmeldenummer: 07116851.2
(22) Anmeldetag: 20.09.2007
(51) Int. Cl.: B60S 1/34

(54) **Wischervorrichtung für eine Panoramascheibe und Verfahren zur Reinigung der Panoramascheibe**
Wiper device for a panoramic windscreen and method for cleaning the panoramic windscreen
Dispositif d'essuyage pour une vitre panoramique et procédé de nettoyage d'une vitre panoramique

(30) Priorität: 04.10.2006 DE 102006046911; 29.06.2007 DE 102007030244
(43) Veröffentlichungstag der Anmeldung: 09.04.2008
(73) Patentinhaber: ROBERT BOSCH GMBH, 70442 Stuttgart (DE)
(72) Erfinder: Kraus, Achim, 77815 Buehl (DE); Zimmer, Joachim, 77880 Sasbach (DE); Kraemer, Godelieve, 76549 Huegelsheim (DE); Rapp, Juergen, 77886 Lauf (DE); Mayer, Stephan, 77855 Achern (DE); Schabanel, Francois, 94100 Saint Maur des Fossés (FR); Trenkle, Lothar, 77833 Ottersweier (DE); Volz, Heiko, 76135 Karlsruhe (DE); Kruse, Michael, 77815 Buehl (DE)

(56) Entgegenhaltungen:
- CH-A5- 689 693
- DE-A1- 19 747 797
- DE-A1- 19 949 446
- FR-A- 2 109 914
- US-A- 3 247 540
- US-A- 3 404 423

## Beschreibung

### Stand der Technik

Die Erfindung betrifft eine Wischervorrichtung für eine Panoramascheibe eines Fahrzeugs und ein Verfahren zur Reinigung der Panoramascheibe. Dazu weist die Wischervorrichtung einen Wischerarm auf. Der Wischerarm ist mit einem fixierten Ende über ein Kippgelenk an einer Abtriebswelle eines Schwenkgetriebes fixiert und weist ein schwenkbares Ende auf. Das schwenkbare Ende deckt einen Schwenkbereich auf der Scheibe ab und ist von der Scheibe um eine erste Kippachse quer zum Wischerarm abkippbar. An dem schwenkbaren Ende des Wischerarms ist ein Wischer über ein Wischergelenk, das ein zweites Kippgelenk aufweist, angeordnet, wobei der Wischer ein unteres und ein oberes Ende aufweist.

Aus US 3,247,540 A ist eine Scheibenwischvorrichtung mit einem Wischerarm bekannt, die einen Wischer aufweist. Der Wischer ist mit dem Wischerarm über ein Kippgelenk verbunden, wobei der Wischer gegenüber dem Ende des Wischerarmes, an dem der Wischer befestigt ist, in einer Ebene einer Scheibe verschwenkbar gelagert ist. Dazu ist ein Zahnrad und eine Zahnstange vorgesehen, die ab einem Schwenkwinkel des Wischerarmes automatisch den Wischer gegenüber dem Wischerarm verschwenkt.

Aus der Druckschrift DE 197 47 797 A1 ist eine Wischanlage für Scheiben von Kraftfahrzeugen bekannt. Diese Wischanlage ist zwar nicht für Panoramascheiben geeignet, hat aber bereits den Vorteil, dass mit der bekannten Wischanlage eine Vergrößerung des Wischfeldes möglich ist, ohne den Schwenkwinkel des Schwenkgetriebes zu verändern. Dazu sind die erste Kippachse und die zweite Kippachse unter einem von 90 Grad abweichenden Winkel zueinander angeordnet, wobei das erste Kippgelenk nicht an der Abtriebswelle des Schwenkgetriebes fixiert ist, sondern am Ende eines Kniehebels angeordnet ist, der mit der Abtriebswelle verbunden ist. Damit wird das Sichtfeld im unteren Bereich einer A-Säule der Windschutz-etwas vergrößert, löst aber nicht die Probleme, die mit dem Reinigen von Panoramascheiben verbunden sind.

Bei Panoramascheiben handelt es sich um Windschutzscheiben von Fahrzeugen, die ein verbreitertes Sichtfeld aufweisen, das durch ein nach hinten Ziehen der A-Säulen der Windschutzscheibe erreicht wird. Damit ist ein erweitertes Sichtfeld für den Fahrer in horizontaler Richtung verbunden. Diese konstruktive Maßnahme bringt jedoch eine starke Krümmung der Scheibe mit sich, die dabei teilweise Werte des Krümmungsradius von unter 1200 mm erreicht. Im Extremfall können Krümmungsradien von nur noch 700 mm im Bereich zu der A-Säule auftreten. Optimale Wischergebnisse mit gängigen Wischeranlagen können bisher nur bei Krümmungsradien von 2000 bis 8000 mm erzielt werden. Die besondere Schwierigkeit ergibt sich daraus, dass keine homogene Krümmung über den gesamten Verlauf der Panoramascheibe vorliegt, sondern vor allem zur Seite der ursprünglichen Position der A-Säulen hin die oben erwähnten besonders hohen Krümmungswerte auftreten.

Aus der starken Krümmung zu den heutigen A-Säulen hin ergibt sich die erhöhte Schwierigkeit für die Kinematik der Wischervorrichtungen, die zu einer Abnahme der Wischqualität führen kann. Während der Wischbewegung kommt das freie obere Ende des Wischers in einem Bereich mit nur einem relativ flachen Winkel zum Anliegen, bzw. überstreicht diesen Bereich in einer weitgehend gestreckten Stellung. Je flacher dieser Winkel ist, umso mehr müsste das Wischblatt verformt werden, um an die Krümmung der Windschutzscheibe quer zur Längsrichtung des Fahrzeugs angepasst zu werden. Ein gleichmäßiger Anpressdruck kann folglich nur schwer erreicht werden. Die Wischqualität nimmt infolge dessen ab. Hinzu kommt die Gefahr des Aufliegens der Federschiene an einem zu flachen Winkel zur Scheibe, was zu einem Rattern und im schlimmsten Fall zu einem Verkratzen der Panoramascheibe führen kann. Weitere Folgen sind Geräuschzunahme an der Umkehrposition des Wischers und eine Schleierbildung infolge des nicht exakten Aufliegens der Wischlippe des Wischers auf der Panoramascheibe.

Herkömmliche Wischanlagen, wie sie aus der obigen Druckschrift bekannt sind, werden in den Befestigungspunkten über ein Entkopplungselement, dem ersten Kippgelenk, mit der Fahrzeugkarosserie fest verschraubt. Das Wischergelenk ist in einem Schaft als zweites Kippgelenk kippend gelagert, welcher mit den Befestigungspunkten über das Entkopplungselement - dem ersten Kippgelenk - verbunden ist. Um den geforderten Wert des Anstellwinkels des Wischblatts zur Windschutzscheibe zu erreichen, braucht man gerade bei stark gekrümmten Windschutzscheiben ein Wischergelenk, welches die Wischlippe jeder Wischwinkelposition der Scheibenkrümmung optimal anpasst.

Besonders die herkömmlichen Wischergelenke stellen infolge ihrer steifen Anbindung, die für eine genaue Einhaltung der Winschwinkel sorgen, ein Hindernis dar. Auch die damit verbundene starre Anbindung des Wischblatts des Wischers zum Wischarm stellt ein Hindernis bezüglich der dynamischen Veränderung des Wischfelds im Bereich der A-Säule dar. Somit können die Anforderungen, die an die Reinigung von stark gekrümmten Panoramascheiben - gerade im Bereich hin zur A-Säule - gestellt werden, mit den bekannten Wischvorrichtungskonzepten nicht erfüllt werden.

### Aufgabe der Erfindung

Aufgabe der Erfindung ist es, eine Wischervorrichtung und ein Verfahren zur Reinigung von Panoramascheiben zu schaffen, welche es ermöglicht, die Bereiche einer Panoramascheibe mit starker Scheibenkrümmung so zu reinigen, dass es den gesetzlichen Anforderungen genügt. Diese kritischen Bereiche befinden sich bei Panoramascheiben in den Randbereichen hin zu den fahrerseitigen und beifahrerseitigen A-Säulen.

### Lösung der Aufgabe

Gelöst wird diese Aufgabe mit dem Gegenstand der unabhängigen Ansprüche. Vorteilhafte Weiterbildungen der Erfindung ergeben sich aus den abhängigen Ansprüchen.

Erfindungsgemäß wird eine Wischervorrichtung für eine Panoramascheibe eines Fahrzeugs und ein Verfahren zur Reinigung der Panoramascheibe geschaffen. Dazu weist die Wischervorrichtung einen Wischerarm auf. Der Wischerarm ist mit einem fixierten Ende über ein Kippgelenk an einer Abtriebswelle eines Schwenkgetriebes fixiert und weist ein schwenkbares Ende auf. Das schwenkbare Ende deckt einen Schwenkbereich auf der Scheibe ab und ist von der Scheibe um eine erste Kippachse quer zum Wischerarm abkippbar. An dem schwenkbaren Ende des Wischerarms ist ein Wischer über ein Wischergelenk angeordnet, wobei der Wischer ein unteres und ein oberes Ende aufweist. Das Wischergelenk hat ein Kippbewegungsgelenk zum Bewegen des Wischers um eine zweite Kippachse quer zum Wischerarm und ein zusätzliches Drehbewegungsgelenk zum Bewegen des Wischers um eine Drehachse vorzugsweise rechtwinklig zum Wischerarm und vorzugsweise rechtwinklig zur zweiten Kippachse. Erfindungsgemäß ist ein Anschlag vorgesehen. Von dem Augenblick an, bei dem das obere Wischerende mit dem Anschlag in Eingriff steht, wird das untere Ende des Wischers aufgrund der Schwenkbewegung des Wischerarms ausgelenkt und kann der starken Krümmung im Seitenbereich der Panoramascheibe folgen. Der Schwenkbereich des schwenkbaren Endes des Wischerarms weist eine Ruheposition im Bereich eines unteren Panoramascheibenquerträgers auf und eine Umkehrposition im Bereich einer A-Säule. Dabei erfolgt das Anstoßen des oberen Wischerendes an den Anschlag und damit ein Ausrasten des Rastmechanismus des Drehbewegungsgelenks noch vor dem Erreichen der Umkehrposition des Wischerarms. Somit wird bis zum Erreichen der Umkehrposition nun das untere Ende des Wischers deutlich ausgelenkt, während das obere Ende des Wischers an dem Anschlag arretiert ist. Dazu kann der Anschlag für das obere Wischerende direkt auf der Panoramascheibe in einem Bereich am oberen Ende der A-Säule angeordnet sein und noch vor der Umkehrposition des Schwenkbereichs des Wischerarms mit dem oberen Wischerende in Eingriff gebracht werden.

Die Anbringung eines derartigen Anschlags kann durch einfaches Aufkleben eines Anschlagelements auf der Panoramascheibe erfolgen. Es ist auch möglich, die Panoramascheibe frei von derartigen Anschlagelementen zu belassen und dafür - wie in einer weiteren Ausführungsform der Erfindung - den Anschlag für das obere Wischerende außerhalb der Panoramascheibe auf einem oberen Panoramascheibenquerträger in einem Bereich am oberen Ende der A-Säule anzuordnen. Bei dieser Ausführungsform der Erfindung weist das obere Wischerende ein das Wischerblatt verlängerndes Anschlagelement auf, das beabstandet von der Panoramascheibe mit dem Anschlag auf dem oberen Panoramascheibenquerträger vor Erreichen der Umkehrposition des Wischerarms in Eingriff bringbar ist.

Durch die Beabstandung des Anschlagelements des Wischers von der Panoramascheibe wird gewährleistet, dass das zusätzliche Anschlagelement am obere Wischerende nicht die Panoramaschei be berührt oder verkratzt und dennoch das obere Wischerende zuverlässig mit dem Anschlag auf dem oberen Panoramascheibenquerträger in Eingriff bringt.Um eventuelle Nachteile, insbesondere Geräuschentwicklungen beim Auftreffen des oberen Wischerendes auf den Anschlag, sei es auf der Panoramascheibe selbst oder auf dem oberen Panoramascheibenquerträger, zu vermindern, ist das Material des Anschlags und/oder des Anschlagselements am oberen Wischerende vorzugsweise aus einem gummielastischen Material.

### Vorteile und Wirkungsweise der Erfindung

Diese Wischervorrichtung hat aufgrund des Wischergelenks, das nicht nur wie bisher eine Kippbewegung um eine zweite Kippachse zulässt, sondern zusätzlich eine Drehbewegung des Wischers um das schwenkbare Ende des Wischers herum ermöglicht, den Vorteil, dass insbesondere im stark gekrümmten Bereich hin zu einer A-Säule durch Drehbewegung des Wischers mit Hilfe des Drehbewegungsgelenks des Wischergelenks eine optimale Anpassung des Wischers an die Scheibenkrümmung in einem stark gekrümmten Bereich der Panoramascheibe möglich ist. Damit ist die steife Anbindung des Wischers an das schwenkbare Ende des Wischerarms durch die bisher übliche zweite Kippmöglichkeit des Wischers gegenüber der Windschutzscheibe aufgehoben.

So kann über das Drehbewegungsgelenk in kritischen Krümmungsbereichen der Scheibe eine zusätzliche Drehung und damit Auslenkung des Wischers gegenüber dem Wischerarm erreicht werden. Mit der durch Drehung des Wischers erreichten Auslenkung kann der für das Wischblatt bzw. die Wischlippe geforderte optimale Anstellwinkel zur Panoramascheibe in vorteilhafter Weise realisiert werden. Dazu ist es nicht erforderlich, das Standarddesign eines Wischhebels bzw. eines Wischarms im Zusammenwirkung mit einem Wischer herkömmlicher Art grundlegend zu verändern. Auch ein zusätzlicher Bauraumbedarf für die Kinematik der erfindungsgemäßen Wischervorrichtung ist nicht notwendig.

In einer bevorzugten Ausführungsform der Erfindung weist das Drehbewegungsgelenk des Wischergelenks einen Rastmechanismus auf, der bei einem Anstoßen des oberen Wischerendes an einen Anschlag ausrastbar ist.

Darüber hinaus ist es vorgesehen, dass das Schwenkgetriebe eine elektronisch geregelte Schwenkwinkelsteuerung für den Schwenkbereich mit einer Zweipunktregelung aufweist, die bei Überschreiten einer Wischfrequenz den Schwenkwinkel derart vermindert, dass das obere Wischerende den Anschlag nicht berührt. Neben einer derartigen Zweipunktsteuerung ist es auch möglich, dass das Schwenkgetriebe eine elektronisch geregelte Schwenkwinkelsteuerung aufweist, die mit zunehmender Schwenkfrequenz den Schwenkbereich des Wischerarms vermindert, so dass bei hohen Wischfrequenzen, wie sie bei starkem Regen erforderlich werden, der Anschlag vom Oberen Wischerende nicht berührt wird.

Ein Verfahren zur Reinigung einer Panoramascheibe eines Fahrzeugs weist die nachfolgenden Verfahrensschritte auf.

Zunächst erfolgt ein Schwenken eines Wischerarms, an dem gelenkig ein Wischer angebracht ist, zwischen einer Ruheposition und einer Umkehrposition. Bei diesem Schwenken erfolgt ein Anstoßen eines oberen Wischerendes an einen Anschlag, bevor der Wischerarm die Umkehrposition erreicht hat. Dabei wird ein unteres Wischerende um eine Drehachse eines Drehgelenks rechtwinklig zum Wischerarm ausgeschwenkt, bis der Wischerarm seine Umkehrposition im oberen Bereich nahe einer A-Säule der Panoramascheibe erreicht hat.

Dieses Verfahren hat den Vorteil, dass lediglich geringfügige Änderungen an herkömmlichen Kinematiken für Wischervorrichtungen vorzunehmen sind und bei dem Reinigungsvorgang die Ausrichtung des Wischers bzw. der Wischerlippe entlang der Oberflächenstruktur der Panoramascheibe gegenüber herkömmlichen Lösungen verbessert ist. Darüber hinaus ist bei diesem Verfahren vorgesehen, dass beim Anstoßen des oberen Wischerendes an den Anschlag ein Rastmechanismus des Drehgelenks ausrastet und das Ausschwenken des unteren Wischerendes freigibt. Dieses Ausschwenken erfolgt solange, bis der Wischerarm seine Umkehrposition erreicht hat, womit der Wischbereich des Wischers zusätzlich vergrößert wird. Bei Erreichen der Ruheposition des Wischerarms rastet der Rastmechanismus des Drehgelenks wieder ein.

Ferner ist ein Steuerungsverfahren für den Schwenkwinkel zwischen Ruhe- und Umkehrposition vorgesehen, mit dem abhängig von der Wischfrequenz der Schwenkbereich des Wischerarms verringert werden kann. Bei Anstehen einer kritischen Wischfrequenz wird dieser Schwenkwinkel derart vermindert, dass das obere Wischende nicht mehr mit dem Anschlag in Eingriff kommt, so dass die Geräuschentwicklung, die sich bei hohen Wischfrequenzen einstellen würde, unterdrückt wird.

Die Erfindung wird nun anhand der beigefügten Figuren näher erläutert.

### Kurze Beschreibung der Figuren

- Figur 1: zeigt eine Prinzipskizze einer Panoramascheibe mit einer Wischervorrichtung gemäß einer ersten Ausführungsform der Erfindung;
- Figur 2: zeigt eine Prinzipskizze einer Panoramascheibe mit einer Wischervorrichtung einer zweiten Ausführungsform der Erfindung.

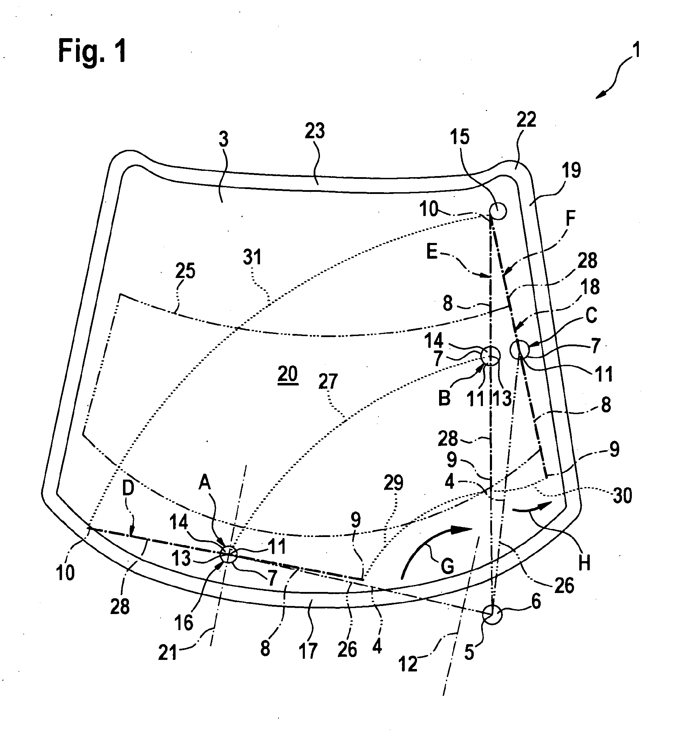

Figur 1 zeigt eine Prinzipskizze einer Panoramascheibe 3 mit einer Wischervorrichtung 1 gemäß einer ersten Ausführungsform der Erfindung. In Figur 1 ist nur die Wischervorrichtung 1 auf der Fahrerseite gezeigt, wobei jedoch die Beifahrerseite mit einer gleichen Wischervorrichtung ausgestattet sein kann, um das Sichtfeld, das hier mit einer strich- dreifachpunktierten Linie 25 auf der Panoramascheibe 3 markiert ist, zu reinigen. Die Wischervorrichtung 1 weist einen Wischerarm 4 auf, der mit einer strich- doppelpunktierten Linie 26 gekennzeichnet ist. Der Wischerarm 4 ist mit einem fixierten Ende 5 über ein Kippgelenk an einer Abtriebswelle 6 eines Schwenkgetriebes fixiert. Gegenüberliegend zu dem fixierten Ende 5 weist der Wischerarm 4 ein schwenkbares Ende 7 auf.

Dieses schwenkbare Ende 7 überdeckt durch die Schwenkbewegung der Abtriebswelle 6 einen Schwenkbereich 20 auf der Panoramascheibe 3, der von einer Ruheposition 16 bis zu einer Umkehrposition 18 das schwenkbare Ende 7 entlang der punktierten Linie 27 über die Panoramascheibe 3 führt. Um einen Wischer 8 an dem schwenkbaren Ende 7 des Schwenkarms 4 anzubringen, weist der Schwenkarm 4 ein erstes Kippgelenk auf, mit dem der Schwenkarm 4 um eine Kippachse 12, die quer zum Schwenkarm angeordnet ist, von der Panoramascheibe 3 abgekippt werden kann. In diesem abgekippten Zustand kann der Wischer 8 über ein Wischergelenk 11 an dem schwenkbaren Ende 7 des Schwenkarms 4 angebracht und unter Kippen um die erste Kippachse 12 auf die Panoramascheibe 3 aufgebracht werden.

Das Wischergelenk 11, mit dem der Wischer 8 etwa mittig an dem schwenkbaren Ende 7 des Schwenkarms 4 angeordnet ist, weist nicht nur ein zweites Kippgelenk, mit dem der Wischer um eine zweite Kippachse 21 an die Panoramascheibe 3 anpressbar ist, auf, sondern zusätzlich ein Drehbewegungsgelenk mit einer Drehachse 13, die rechtwinklig zu der Kippachse 21 und zu dem Wischerarm 4 angeordnet ist. Das Drehgelenk verfügt über einen Rastmechanismus 14, der gewährleistet, dass in der Ruheposition 16 des Schwenkarms 4 der Wischer 8 gegenüber dem Schwenkarm 4 nicht oder nur geringfügig ausgelenkt ist.

Das schwenkbare Ende 7 des Schwenkarms 4 weist drei Stellungen auf. In der Ruheposition wird die Stellung A, in einer Ausrastposition wird die Stellung B und in der Umkehrposition wird die Stellung C von dem schwenkbaren Ende 7 des Wischerarms 4 eingenommen. In diesen drei Stellungen A, B und C weist der Wischer 8 die Ruheposition D bzw. die Ausrastposition E und die Umkehrposition F auf. Der Wischer 8 ist in diesen drei Stellungen D, E und F durch eine fette strichpunktierte Linie 28 gekennzeichnet. Der Wischer 8 weist ein unteres Ende 9 und ein oberes Ende 10 auf, wobei das untere Ende 9 Schwenkbewegungen durchführen kann, die mit punktierten Linien 29 und 30 markiert sind, während das obere Ende 10 eine Schwenkbewegung durchführt, die mit der punktierten Linie 31 gezeigt wird.

In dieser Ausführungsform der Erfindung ist ein Anschlag 15 auf der Panoramascheibe 3 nahe einem oberen Ende 22 der A-Säule 19 und nahe einem oberen Panoramascheibenquerträger 23 angeordnet. In der Ruhestellung 16 des Schwenkarms 4 ist der Wischer in einem unteren Bereich der Panoramascheibe 3 an einem unteren Panoramascheibenträger 17 angeordnet. Wenn nun der Scheibenwischer und damit der Scheibenwischerarm 4 über die Abtriebsachse 6 des Schwenkgetriebes betätigt wird, so überdeckt der Wischer 8 mit eingerastetem Rastmechanismus 14 des Drehbewegungsgelenks den Schwenkbereich 20 bis zu seiner Position E bzw. zur Position B des schwenkbaren Endes 7 des Schwenkarms 4.

In der Position E berührt das obere Ende 10 des Wischers 8 den Anschlag 15 und kommt damit in Eingriff mit dem Anschlag 15 noch bevor die Umkehrposition 18 des Schwenkarms 4 erreicht ist. Bis zu diesem Anschlag wird das untere Ende 9 des Wischers 8 durch den eingerasteten Rastmechanismus 14 des Drehgelenks entlang der punktierten Linie 29 in Pfeilrichtung G geführt und schwenkt dann in Pfeilrichtung H entlang der punktierten Linie 30 bis zur Umkehrposition 18 aus, wobei der stark gekrümmte Teil der Panoramascheibe 3 im Bereich der A-Säule 19 mit einem nahezu parallel anliegenden Wischer 8 nach Ausrasten des Rastmechanismus 14 aufgrund der Arretierung des oberen Wischerendes 10 durch den Anschlag 15 gereinigt wird.

Mit Hilfe des Anschlags 15 auf der Panoramascheibe 3 kann der Wischer 8 mit seinem Wischblatt und seiner Wischlippe somit noch eine weitere Bewegung in Form eines Ausschwenkens entlang der punktierten Linie 30 durchführen bis die Umkehrposition 18 des schwenkbaren Endes 7 des Wischerarms 4 erreicht ist. Der Anschlag 15 befindet sich dabei am ende eines Außenkreises auf der Panoramascheibe 3, der durch die gepunktete Linie 31 markiert ist. Dabei erfährt beim Anstoßen an den Anschlag 15 der Wischer 8 im äußeren Bereich einen Widerstand. Durch das zusätzliche Drehgelenk in dem Wischergelenk 11 kann somit der untere Teil und damit das untere Ende 9 des Wischers 8 weiter nach außen zur A-Säule 19 hin fahren.

Da eine derartige Anwendung gegenwärtig nur bei niedrigen Wischfrequenzen möglich ist, zumal das Anschlagen auf den Anschlag insbesondere bei hohen Frequenzen ein starkes Geräusch verursacht, welches sich dann über die Windschutzscheibe in den Fahrgastraum übertragen kann, ist es vorgesehen, den Schwenkbereich bei hohen Frequenzen derart zu vermindern, dass das obere Ende 10 des Wischers 8 nicht mehr mit dem Anschlag 15 in Eingriff bringbar ist. Damit wird jedoch auch auf die zusätzliche Reinigung im Bereich der A-Säule verzichtet.

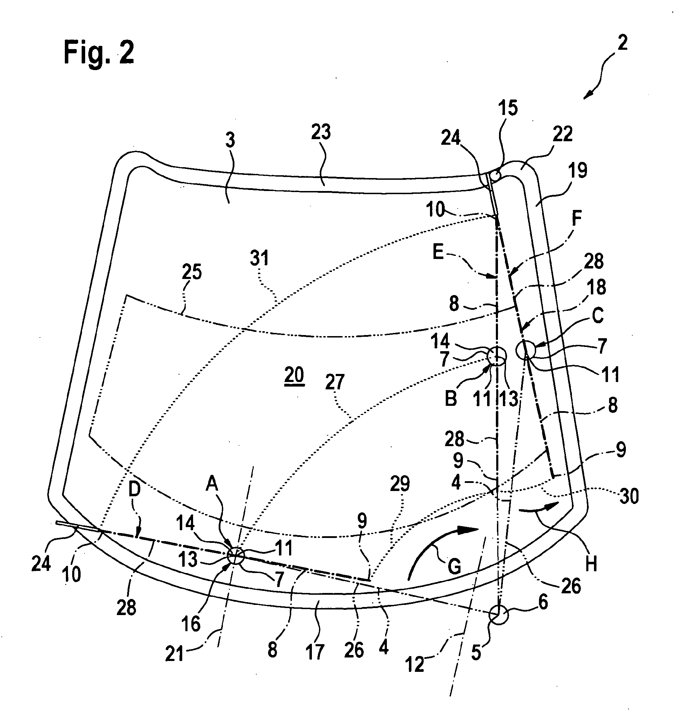

Figur 2 zeigt eine Prinzipskizze einer Panoramascheibe mit einer Wischervorrichtung 2 einer zweiten Ausführungsform der Erfindung. Komponenten mit gleichen Funktionen wie in der Figur 1 werden mit gleichen Bezugszeichen gekennzeichnet und nicht extra erörtert. In dieser zweiten Ausführungsform der Erfindung wird auf einen Anschlag 15 im Bereich der Panoramascheibe 3 verzichtet und dafür ein Anschlag 15 auf oder oberhalb des oberen Panoramascheibenträgers 23 vorgesehen. Gleichzeitig wird an dem oberen Wischerende 10 ein Anschlagelement 24 angebracht, das über den mit gepunkteter Linie 31 gekennzeichneten Außenkreis hinausragt und von der Panoramascheibe 3 beabstandet ist. Das Anschlagelement 24 ist mit dem Anschlag 15 auf dem oberen Panoramascheibenquerträger 23 in Eingriff bringbar. Diese Anordnung hat den Vorteil, dass der Anschlag 15 und das Anschlagelement 24 geräuschdämpfend gestaltet werden können, so dass sich die Anschlaggeräusche nicht oder nur stark gedämpft im Innenraum des Fahrzeugs bemerkbar machen.

## Patentansprüche

1. Wischervorrichtung für eine Panoramascheibe (3) eines Fahrzeugs mit
- einem Wischerarm (4), der mit einem fixierten Ende (5) an einer Abtriebswelle (6) eines Schwenkgetriebes über ein Kippgelenk fixiert ist und ein schwenkbares Ende (7) aufweist, wobei das schwenkbare Ende (7) einen Schwenkbereich (20) auf der Scheibe (3) abdeckt und von der Scheibe (3) um eine erste Kippachse (12) quer zum Wischerarm (4) abkippbar ist,
- einem Wischer, der ein unteres und ein oberes Wischerende (9, 10) aufweist und an dem schwenkbaren Ende (7) des Wischerarms (4) über ein Wischergelenk (11) gelenkig angeordnet ist,
wobei das Wischergelenk (11) ein Kippbewegungsgelenk für den Wischer (8) zum Bewegen des Wischers (8) um eine zweite Kippachse (21) quer zum Wischerarm (4) und ein Drehbewegungsgelenk zum Bewegen des Wischers (8) um eine Drehachse (13) aufweist, **dadurch gekennzeichnet,**
**dass** ein Anschlag (15) für das obere Wischerende (10) auf der Panoramascheibe (3) in einem Bereich am oberen Ende einer A-Säule (19) angeordnet ist und vor der Umkehrposition (18) des Schwenkbereichs (20) des Wischerarms (4) mit dem oberen Wischerende (10) in Eingriff bringbar ist oder
**dass** der Anschlag (15) für das obere Wischerende (10) außerhalb der Panoramascheibe (3) auf einem oberen Panoramascheibenquerträger (23) in einem Bereich am oberen Ende (22) der A-Säule (19) angeordnet ist und vor der Umkehrposition (18) des Schwenkbereichs (20) des Wischerarms (4) mit dem oberen Wischerende (10) in Eingriff bringbar ist, und das obere Wischerende (10) ein Anschlagselement (24) aufweist, das beabstandet von der Panoramascheibe (3) mit dem Anschlag (15) vor Erreichen der Umkehrposition (18) des Wischerarms (4) in Eingriff bringbar ist,
wobei die Drehachse des Drehbewegungsgelenks rechtwinklig zum Wischerarm und rechtwinklig zur zweiten Kippachse angeordnet ist,
wobei der Schwenkbereich (20) des schwenkbaren Endes (7) des Wischerarms (4) eine Ruheposition (16) im Bereich eines unteren Panoramascheibenquerträgers (17) und eine Umkehrposition (18) im Bereich der A-Säule (19) aufweist.

2. Wischervorrichtung nach Anspruch 1,
**dadurch gekennzeichnet, dass**
das Drehbewegungsgelenk einen Rastmechanismus (14) aufweist, der bei einem Anstoßen des oberen Wischerendes (10) an einen Anschlag (15) ausrastbar ist.

3. Wischervorrichtung nach einem der vorhergehenden Ansprüche,
**dadurch gekennzeichnet, dass**
das Schwenkgetriebe eine elektronisch geregelte Schwenkwinkelsteuerung für den Schwenkbereich (20) mit einer Zweipunktregelung aufweist, die bei Überschreiten einer Wischfrequenz den Schwenkwinkel derart vermindert, dass das obere Wischerende (10) den Anschlag (15) nicht berührt.

4. Wischervorrichtung nach einem der vorhergehenden Ansprüche,
**dadurch gekennzeichnet, dass**
das Schwenkgetriebe eine elektronisch geregelte Schwenkwinkelsteuerung aufweist, die mit zunehmender Schwenkfrequenz den Schwenkbereich (20) vermindert.

5. Verfahren zur Reinigung einer Panoramascheibe (3) eines Fahrzeugs, das folgende Verfahrensschritte aufweist:
- Schwenken eines Wischerarms (4), an dem gelenkig ein Wischer (8) angebracht ist, zwischen einer Ruheposition (16) und einer Umkehrposition (18);
- Anstoßen eines oberen Wischerendes (10) an einen Anschlag (15), bevor der Wischerarm (4) die Umkehrposition (18) erreicht;
- Ausschwenken eines unteren Wischerendes (9) um eine Drehachse (13) eines Drehgelenks rechtwinklig zum Wischerarm (4) bis der Wischerarm (4) seine Umkehrposition (18) im oberen Bereich nahe einer A-Säule (19) erreicht.

6. Verfahren nach Anspruch 5,
**dadurch gekennzeichnet, dass**
beim Anstoßen des oberen Wischerendes (10) an den Anschlag (15) ein Rastmechanismus (14) des Drehgelenks ausrastet und das Ausschwenken des unteren Wischerendes (9) freigibt, und wobei nach Erreichen der Ruheposition (16) der Rastmechanismus (14) des Drehgelenks (13) wieder einrastet.

7. Verfahren nach Anspruch 5 oder Anspruch 6,
**dadurch gekennzeichnet, dass**
der Schwenkwinkel zwischen Ruheposition (16) und Umkehrposition (18) bei Erreichen einer kritischen Wischfrequenz derart verringert wird, dass das obere Wischerende (10) nicht mehr mit dem Anschlag (15) in Eingriff kommt.

## Claims

1. Wiper device for a panoramic windscreen (3) of a vehicle, comprising
- a wiper arm (4) which is fixed by a fixed end (5) to an output shaft (6) of a pivoting mechanism via a tilting joint and has a pivotable end (7), wherein the pivotable end (7) covers a pivoting region (20) on the windscreen (3) and can be tilted away from the windscreen (3) about a first tilting axis (12) transversely with respect to the wiper arm (4),
- a wiper which has a lower and an upper wiper end (9, 10) and is arranged in an articulated manner on the pivotable end (7) of the wiper arm (4) via a wiper joint (11),
wherein the wiper joint (11) has a tilting movement joint for the wiper (8) for moving the wiper (8) about a second tilting axis (21) transversely with respect to the wiper arm (4) and a rotary movement joint for moving the wiper (8) about an axis of rotation (13), **characterized in that** a stop (15) for the upper wiper end (10) is arranged on the panoramic windscreen (3) in a region at the upper end of an A-pillar (19) and can be brought into engagement with the upper wiper end (10) before the reversal position (18) of the pivoting region (20) of the wiper arm (4), or
**in that** the stop (15) for the upper wiper end (10) is arranged outside the panoramic windscreen (3) on an upper panorama windscreen crossmember (23) in a region at the upper end (22) of the A-pillar (19) and can be brought into engagement with the upper wiper end (10) before the reversal position (18) of the pivoting region (20) of the wiper arm (4), and the upper wiper end (10) has a stop element (24) which can be brought into engagement, at a distance from the panoramic windscreen (3), with the stop (15) before reaching the reversal position (18) of the wiper arm (4), wherein the axis of rotation of the rotary movement joint is arranged at a right angle to the wiper arm and at a right angle to the second tilting axis,
wherein the pivoting region (20) of the pivotable end (7) of the wiper arm (4) has a rest position (16) in the region of a lower panoramic windscreen crossmember (17) and a reversal position (18) in the region of the A-pillar (19).

2. Wiper device according to Claim 1,
**characterized in that** the rotary movement joint has a latching mechanism (14) which can be unlatched when the upper wiper end (10) butts against a stop (15).

3. Wiper device according to one of the preceding claims,
**characterized in that** the pivoting mechanism has an electronically regulated pivoting angle control for the pivoting region (20) with a two-point regulation which reduces the pivoting angle when a wiping frequency has been exceeded such that the upper wiper end (10) does not make contact with the stop (15).

4. Wiper device according to one of the preceding claims,
**characterized in that** the pivoting mechanism has an electronically regulated pivoting angle control which reduces the pivoting region (20) with increasing pivoting frequency.

5. Method for cleaning a panoramic windscreen (3) of a vehicle, which comprises the following method steps:
- pivoting a wiper arm (4), on which a wiper (8) is mounted in an articulated manner, between a rest position (16) and a reversal position (18);
- causing an upper wiper end (10) to butt against a stop (15) before the wiper arm (4) reaches the reversal position (18);
- pivoting a lower wiper end (9) about an axis of rotation (13) of a rotary joint at a right angle to the wiper arm (4) until the wiper arm (4) reaches its reversal position (18) in the upper region close to an A-pillar (19).

6. Method according to Claim 5,
**characterized in that**, when the upper wiper end (10) butts against the stop (15), a latching mechanism (14) of the rotary joint unlatches and enables the lower wiper end (9) to pivot out, and wherein, after reaching the rest position (16), the latching mechanism (14) of the rotary joint (13) latches in again.

7. Method according to Claim 5 or Claim 6, **characterized in that** the pivoting angle between rest position (16) and reversal position (18) is reduced upon reaching a critical wiping frequency such that the upper wiper end (10) no longer comes into engagement with the stop (15).

## Revendications

1. Dispositif d'essuie-glace pour une vitre panoramique (3) d'un véhicule, comprenant
- un bras d'essuie-glace (4) qui est fixé par une extrémité fixe (5) à un arbre de sortie (6) d'un mécanisme de pivotement par le biais d'une articulation basculante et présente une extrémité pivotante (7), l'extrémité pivotante (7) couvrant une plage de pivotement (20) sur la vitre (3) et pouvant basculer depuis la vitre (3) autour d'un premier axe de basculement (12) transversalement au bras d'essuie-glace (4),
- un essuie-glace, qui présente une extrémité d'essuie-glace inférieure (9) et une extrémité d'essuie-glace supérieure (10), et qui est disposé de manière articulée à l'extrémité pivotante (7) du bras d'essuie-glace (4) par le biais d'une articulation d'essuie-glace (11), l'articulation d'essuie-glace (11) présentant une articulation à mouvement de basculement pour l'essuie-glace (8), pour déplacer l'essuie-glace (8) autour d'un deuxième axe de basculement (21) transversalement au bras d'essuie-glace (4) et une articulation à mouvement de rotation pour déplacer l'essuie-glace (8) autour d'un axe de rotation (13), **caractérisé**
**en ce qu'**une butée (15) pour l'extrémité d'essuie-glace supérieure (10) est disposée sur la vitre panoramique (3) dans une région à l'extrémité supérieure d'une colonne A (19) et peut être amenée en prise avec l'extrémité d'essuie-glace supérieure (10) avant la position d'inversion (18) de la plage de pivotement (20) du bras d'essuie-glace (4) ou
**en ce que** la butée (15) pour l'extrémité d'essuie-glace supérieure (10) est disposée à l'extérieur de la vitre panoramique (3) sur un support transversal de vitre panoramique supérieur (23) dans une région à l'extrémité supérieure (22) de la colonne A (19) et peut être amenée en prise avant la position d'inversion (18) de la plage de pivotement (20) du bras d'essuie-glace (4) avec l'extrémité d'essuie-glace supérieure (10), et l'extrémité d'essuie-glace supérieure (10) présente un élément de butée (24) qui peut être amené en prise à distance de la vitre panoramique (3) avec la butée (15) avant que la position d'inversion (18) du bras d'essuie-glace (4) ne soit atteinte,
l'axe de rotation de l'articulation à mouvement de rotation étant disposé à angle droit par rapport au bras d'essuie-glace et à angle droit par rapport au deuxième axe de basculement,
la région de pivotement (20) de l'extrémité pivotante (7) du bras d'essuie-glace (4) présentant une position de repos (16) dans la région d'un support transversal de vitre panoramique inférieur (17) et présentant une position d'inversion (18) dans la région de la colonne A (19).

2. Dispositif d'essuie-glace selon la revendication 1,
**caractérisé en ce que**
l'articulation à mouvement de rotation présente un mécanisme d'encliquetage (14) qui peut être désencliqueté lors d'une venue en butée de l'extrémité d'essuie-glace supérieure (10) contre une butée (15).

3. Dispositif d'essuie-glace selon l'une quelconque des revendications précédentes,
**caractérisé en ce que**
le mécanisme de pivotement présente une commande d'angle de pivotement à commande électronique pour la plage de pivotement (20) avec une régulation à deux points qui, en cas de dépassement d'une fréquence d'essuyage, réduit l'angle de pivotement de telle sorte que l'extrémité d'essuie-glace supérieure (10) ne vienne pas en contact avec la butée (15).

4. Dispositif d'essuie-glace selon l'une quelconque des revendications précédentes,
**caractérisé en ce que**
le mécanisme de pivotement présente une commande d'angle de pivotement à commande électronique, qui, lorsque la fréquence de pivotement augmente, réduit la plage de pivotement (20).

5. Procédé de nettoyage d'une vitre panoramique (3) d'un véhicule, comprenant les étapes de procédé suivantes:
- pivotement d'un bras d'essuie-glace (4) sur lequel est monté, de manière articulée, un essuie-glace (8), entre une position de repos (16) et une position d'inversion (18) ;
- venue en butée d'une extrémité d'essuie-glace supérieure (10) contre une butée (15) avant que le bras d'essuie-glace (4) n'atteigne la position d'inversion (18) ;
- pivotement d'une extrémité d'essuie-glace inférieure (9) autour d'un axe de rotation (13) d'une articulation pivotante à angle droit par rapport au bras d'essuie-glace (4) jusqu'à ce que le bras d'essuie-glace (4) ait atteint sa position d'inversion (18) dans la région supérieure proche d'une colonne A (19).

6. Procédé selon la revendication 5,
**caractérisé en ce que**
lors de la venue en butée de l'extrémité d'essuie-glace supérieure (10) contre la butée (15), un mécanisme d'encliquetage (14) de l'articulation pivotante se désencliquète et libère le pivotement de l'extrémité d'essuie-glace inférieure (9), et après que la position de repos (16) a été atteinte, le mécanisme d'encliquetage (14) de l'articulation pivotante (13) s'encliquète à nouveau.

7. Procédé selon la revendication 5 ou la revendication 6,
**caractérisé en ce que**
l'angle de pivotement entre la position de repos (16) et la position d'inversion (18), lorsqu'une fréquence d'essuyage critique est atteinte, est réduit de telle sorte que l'extrémité d'essuie-glace supérieure (10) ne vienne plus en prise avec la butée (15).
